# EUROPEAN PATENT SPECIFICATION

(11) **EP 3 744 655 B1**
(45) Date of publication and mention of the grant of the patent: **04.10.2023**
(21) Application number: 20175503.0
(22) Date of filing: 19.05.2020
(51) Int. Cl.: B65D 35/10, B29C 39/10

(54) **TUBE CONTAINER HAVING SHUTOFF FUNCTION ON SHOULDER AND NECK AND METHOD OF MANUFACTURING THE SAME**
ROHRBEHÄLTER MIT ABSPERRFUNKTION AN SCHULTER UND HALS UND VERFAHREN ZU SEINER HERSTELLUNG
RÉCIPIENT DE TUBE AYANT UNE FONCTION D'ARRÊT SUR L'ÉPAULE ET LE COU ET SON PROCÉDÉ DE FABRICATION

(30) Priority: 31.05.2019 KR 20190064410
(43) Date of publication of application: 02.12.2020
(73) Proprietor: Ipack Co., Ltd., Pocheon-si, Gyeonggi-do 11154 (KR); Amorepacific Corporation, Seoul 04386 (KR)
(72) Inventor: Lim, Jong Su, Pocheon-si, Gyeonggi-do 11154 (KR)
(74) Representative: Müller Verweyen

(56) References cited:
- EP-A1- 0 524 897
- JP-A- 2002 225 057
- JP-A- 2010 083 550
- JP-A- 2011 046 441
- JP-A- 2013 233 982
- US-A1- 2015 114 993

## Description

### BACKGROUND OF THE INVENTION

### 1. Field of the Invention

The present invention relates to a tube container, and more particularly, to a tube container having a shutoff function on a shoulder and a neck and a method of manufacturing the same, in which the shutoff function is provided to prevent chemical changes due to external environmental factors from occurring in even a shoulder and neck portion that serves as a head of the tube container, so that contents filled in the tube container can be prevented from decaying or deteriorating, and intrinsic ingredients of the contents can be prevented from being lost for a long time.

### 2. Description of the Related Art

In general, tube containers are used for various purposes due to the convenience of manufacture and use.

The tube container, among the various tube containers, used after filled with medicine, cosmetic, toothpaste or the like has a technical configuration for effectively protecting the filled contents from external environments.

In other words, conventional aluminum (Al) sheets are generally used as a gas barrier layer, to block infiltration of external environmental factors such as ultraviolet rays, oxygen, and air so that the contents can be prevented from decaying, deteriorating or the like due to chemical changes caused by the contact of the contents with the external environmental factors, and intrinsic ingredients of the contents can be maintained for a long time, in which the above-described tube container is generally referred to as a laminated tube.

According to the tube container having the gas barrier layer formed of the conventional aluminum sheet, the gas barrier layer is positioned in a middle portion, and resin layers formed of copolymer having excellent adhesion property are provided on inner and outer sides about the gas barrier layer, respectively.

In addition, after a surface layer is formed by bonding a polyethylene film to an outer side of the outer resin layer, and a film layer is bonded to an inner inside of the inner resin layer, both ends overlap each other and a side sealing is performed through ultrasonic or highfrequency fusion. Then, a tube body is manufactured by cutting the target in a desired length.

Then, after forming a head including a shoulder and a neck at one end of the tube body by using a well-known tube head forming device, a sealing work is performed on an
outlet of the neck. A cap is fastened to the neck by a well-known scheme.

Then, after required contents are filled through a side opposite to the head, an end sealing is performed, and thus a fabrication of the tube container filled with the contents is completed.

Korean Registered Patent Publication No. 10-0554087, Korean Registered Patent Publication No. 10-1348125, Korean Unexamined Utility Model Publication No. 20-2017-0003720, Korean Unexamined Patent Publication No. 10-2017-0097600, and the like disclose the related art on the conventional tube container including the gas barrier layer formed of the aluminum sheet as described in the above manner (Hereinafter, referred to as 'document of related art').
(Patent Document 1) Korean Registered Patent Publication No. 10-0554087
(Patent Document 2) Korean Registered Patent Publication No. 10-1348125
(Patent Document 3) Korean Unexamined Utility Model Publication No. 20-2017-0003720
(Patent Document 4) Korean Unexamined Patent Publication No. 10-2017-0097600

A tube head comprising an insert forming a barrier is known from US 2015/0114993 A1. Said tube head is connected to a skirt so as to form an internal volume of the tube, wherein the tube head comprises a body. The body comprises a neck and a shoulder connected to the neck. The tube head further comprising an insert arranged so as to be in contact with said shoulder so as to form a barrier between the body and the product contained in the internal volume.

EP 0 524 897 A1 discloses a tube head having a barrier-effect inner coating, which consists of a multilayer polmeric secured by an outer superficial layer. The inner coating comprises one or more polymeric barrier-effect layers and an inner superficial polyolefin or polyester layer.

Another example of a tube container is known from JP 2002 225057 A with a tube head with an insert material. The insert material has barrier properties and is punched circularly and has several slits to a central part. The central part split piece is formed during mold closing to cover the cylindrical surface of the neck with the slits opened.

Document JP 2013 233982 A discloses a tube container for packaging low fluidity content (paste-form). It has an aluminum part whose upper surface is closed, and a front-end part inserted into the inner surface of the aluminum part, which is provided with shoulder and opening-neck parts.

Document JP 2011 046441 A discloses a tube having a barrier laver in the head which is joined to the top egde of the tube.

### SUMMARY OF THE INVENTION

However, as described in the Background of the invention, the tube containers according to the documents of related art in addition to the conventional tube container including the gas barrier layer formed of the general aluminum sheet have disadvantages in that the gas barrier layer formed of the aluminum sheet is provided at the tube body, but is not provided at a shoulder as well as a neck that serve as a head.

Accordingly, external environmental factors such as ultraviolet rays, oxygen, and air cannot be prevented from infiltrating through the shoulder or neck that is not provided with the gas barrier layer, and chemical changes occur in the contents due to contact with the external environmental factors, and thus the contents decay, deteriorate or the like, and intrinsic ingredients of the contents are damaged in a short time.

In order to solve the above-mentioned conventional problems, the present invention provides a tube container according to claim 1.

Claim 2 discloses the method according to the present invention.

### BRIEF DESCRIPTION OF THE DRAWINGS

FIG. 1 is a sectional flow chart for illustrating the present invention.
FIG. 2 is a sectional view for illustrating a state of use of the present invention.
FIG. 3 is a block diagram for illustrating a method of manufacturing the present invention.

### DETAILED DESCRIPTION OF THE INVENTION

Hereinafter, preferred embodiments of the present invention will be described in detail with reference to the accompanying drawings, and the present invention is not limited to or restricted by the embodiments.

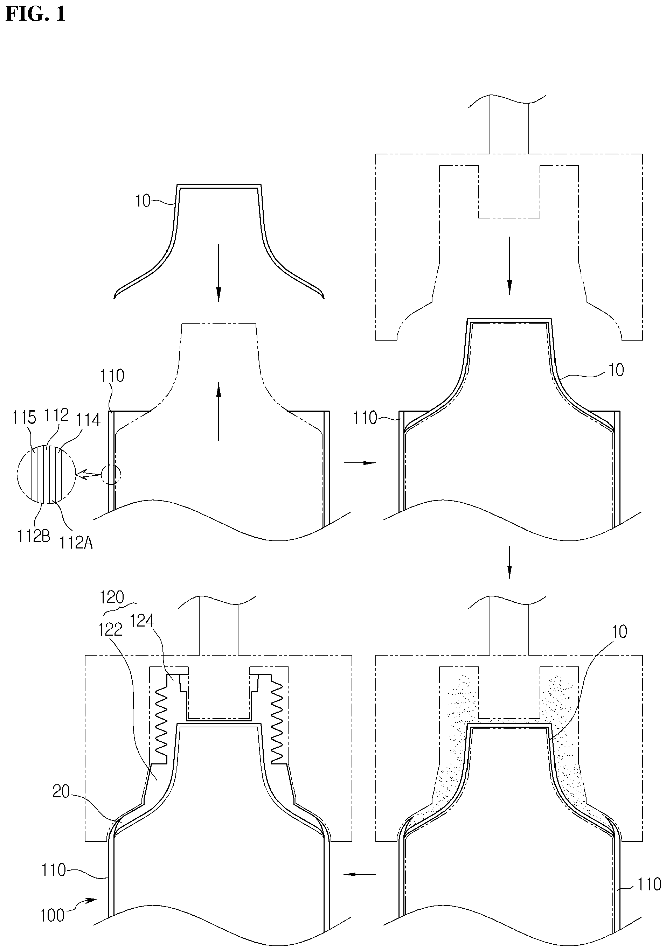

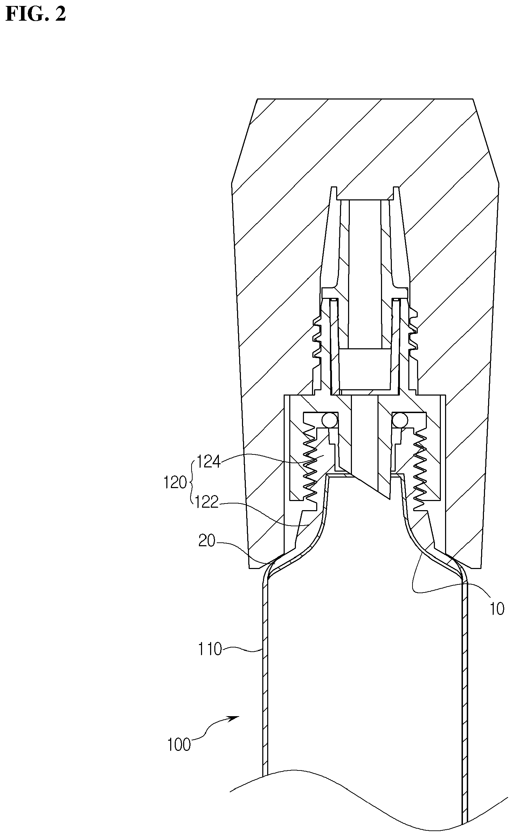

FIG. 1 is a sectional flow chart for illustrating the present invention. FIG. 2 is a sectional view for illustrating a state of use of the present invention.

As shown in the drawings, in general, a tube container 100 used after filled with medicine, cosmetic, toothpaste or the like is configured to include a gas barrier layer 112 formed of an aluminum sheet to effectively protect the filled contents from external environments.

In other words, according to the general tube container 100 having the gas barrier layer 112 formed of the aluminum sheet, the gas barrier layer 112 is interposed in a middle, and resin layers 112A and 112B formed of copolymer having excellent adhesion are provided on inner and outer sides about the gas barrier layer.

In addition, after a surface layer 115 is formed by bonding a polyethylene film to an outer side of the outer resin layer 112B, and a film layer 114 is bonded to an inner inside of the inner resin layer 112A, both ends overlap each other and a side sealing is performed through ultrasonic or high frequency fusion. Thus, a cutting by a predetermined length is performed to manufacture a tube body 110.

Then, after forming a head 120 including a shoulder 122 and a neck 124 at one end of the tube body by using a well-known tube head forming device, a lid sealing is performed on an outlet of the neck by a well-known scheme. A cap is fastened to the neck by a well-known scheme.

Then, after required contents are filled through a side opposite to the formed head, an end sealing is performed, and thus a fabrication of the tube container 100 filled with the contents is completed.

However, there are disadvantages in that the contents may decay or deteriorate due to the external environmental factors at the shoulder and neck as a head of the tube container including the gas barrier layer formed of the conventional aluminum sheet, and the inherent ingredients of the contents may be lost.

According to the present invention, the shutoff function is provided to prevent chemical changes from occurring in even a shoulder and neck portion as a head of the tube container due to external environmental factors, so that contents filled in the tube container can be prevented from decaying or deteriorating, and the intrinsic ingredients of the contents can be prevented from being lost for a long time.

The technical configuration, which has a function of blocking the external environmental factors at the shoulder 122 and the neck 124 of the head 120 in the front end of the tube body 110 according to the present invention, includes that the head gas barrier layer 10 formed of the conventional aluminum sheet is bonded to inner side surfaces of the shoulder 122 and the neck 124 of the head 120 in the form corresponding to the inner side surfaces according to the formation of the head 120 in the conventional head forming device.

The head gas barrier layer 10 formed of the aluminum sheet is formed to have a shape of a lamp shade to correspond to the shoulder 122 and the neck 124 constituting the head 120, in which a top surface positioned corresponding to the neck is manufactured to be closed.

In other words, as the head is formed in the head forming device after the head gas barrier layer formed of the aluminum sheet and having the shape corresponding to the shoulder and neck of the head is positioned at the front end of the tube body, the head gas barrier layer naturally is bonded to the inner side surface of the head. At this time, since the head is formed using a PE material or a copolymer that is a general synthetic resin having excellent adhesion, an additional adhesive is not required, and the aluminum sheet, which is the head gas barrier layer, naturally is bonded at the same time of the forming.

Further, a lower edge of the head gas barrier layer 10 is bonded by a junction 20 formed between an outer surface of the edge and an inner surface of the front end of the tube body 110 according to the formation of the head 120.

In other words, when a part of molten resin upon the head forming is introduced while being permeated into a space between the outer surface of the edge of the head gas barrier layer and the inner surface of the front end of the tube body, the contacting portions are tightly bonded to each other.

Accordingly, the tube body and the head gas barrier layer bonded to the inner surface of the head according to the head forming are also bonded to each other with high airtightness.

Further, in the head gas barrier layer, a top surface positioned corresponding to the neck may be perforated, for use, by a punching pin or the like provided in the cap, or may be perforated by using a separate tool.

Therefore, according to the present invention, the gas barrier layer is formed of the aluminum sheet in the tube body of the tube container, and the head gas barrier layer, which has a function of blocking the shoulder and neck portion that is the head from the external environmental factors without an especially complicated technical configuration, so that the contents can be prevented from decaying or deteriorating.

Further, the intrinsic ingredients of the contents can be maintained for a long time without loss.

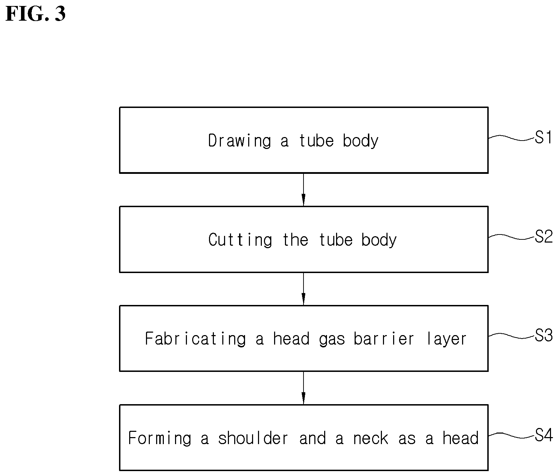

FIG. 3 is a block diagram for illustrating a method of manufacturing the present invention.

The manufacturing method will be described to achieve the above-mentioned technical configuration as shown in the drawings.

In the method of manufacturing the tube container including the gas barrier layer formed of the aluminum sheet, conventional and well-known detailed technology will be omitted.

In addition, the same reference numerals will be used for the same technical configurations with reference to FIG. 1.

First, a step S1 is performed in which a tube body 110 is manufactured to include a gas barrier layer 112 formed of an aluminum sheet.

The tube body is manufactured in a manner described in the Background and the Detailed description of the invention, and detailed descriptions will be omitted.

Next, a step S2 is performed in which the manufactured tube body 110 is cut to have a predetermined length by a well-known scheme for a required length.

In addition, a step S3 is performed in which a head gas barrier layer 10 formed of a conventional aluminum sheet is manufactured by a well-known manufacturing scheme to have a shape corresponding to a shoulder and neck portion which is a head to be formed at the front end of the cut tube body 110.

The head gas barrier layer 10 has a shape of a lamp shade to correspond to the shoulder and neck, in which a top surface positioned corresponding to the neck is manufactured to be closed.

Next, a step S4 is performed in which the shoulder 122 and the net 124 of the head 120 are formed by a well-known head forming device so that the head gas barrier layer 10 is positioned on the inner surface of the tube body after the manufactured head gas barrier layer 10 is positioned at the front end of the tube body 110 by using a general jog, pedestal or the like.

In other words, since the head is formed using a PE material or a copolymer that is a general synthetic resin having excellent adhesion, an additional adhesive is not required, and the aluminum sheet, which is the head gas barrier layer, is naturally bonded simultaneously upon the forming.

Further, a lower edge of the head gas barrier layer 10 is bonded by a junction 20 formed between an outer surface of the edge and an inner surface of the front end of the tube body 110 according to the formation of the head 120.

In other words, when a part of molten resin upon the head forming is introduced while being permeated into a space between the outer surface of the edge of the head gas barrier layer and the inner surface of the front end of the tube body, the contacting portions are tightly bonded to each other.

Accordingly, the tube body and the head gas barrier layer bonded to the inner surface of the head according to the head forming are also bonded to each other with high airtightness.

According to the present invention, the method of manufacturing the tube container includes the process for forming the head gas barrier layer in the manufacturing process by the well-known scheme.

Accordingly, only the process of interposing the head gas barrier layer is added to the process of manufacturing the tube container without a complicated process, so that the manufacturing process can be simplified without complication.

## Claims

1. A tube container (100) having a shutoff function on a shoulder (122) and a neck (124) thereof, the tube container (100) comprising:
a tube body (110) including a gas barrier layer (112) formed of an aluminum sheet;
a head (120) formed at a front end of the tube body (110) and having a shoulder (122) and a neck (124); and
a head gas barrier layer (10), which is formed of an aluminum sheet,
wherein the head gas barrier layer (10) has a shape corresponding to a shape of inner surfaces of the shoulder (122) and the neck (124),
wherein a top surface of the head gas barrier layer (10) is closed and positioned corresponding to the neck (124), and is bonded to the inner surfaces of the shoulder (122) and the neck (124) according to formation of the head (120), and
wherein an edge of a lower end of the head gas barrier layer (10) is formed as a contact portion of the head gas barrier layer (10),
wherein a bonding portion (20) is formed between an outer surface of the edge of the head gas barrier layer (10) and an inner surface of the front end of the tube body (110),
**characterized in that**
when a part of molten resin upon the forming of the head (120) is introduced while being permeated into a space between the outer surface of the edge of the head gas barrier layer (10) and the inner surface of the front end of the tube body (110) to form the bonding portion (20), the edge of the head gas barrier layer (10) is tightly bonded to the bonding portion (20).

2. A method of manufacturing a tube container (100) having a shutoff function on a shoulder (122) and a neck (124) thereof, the method comprising:
manufacturing a tube body (110) including a gas barrier layer (112) formed of an aluminum sheet;
cutting the manufactured tube body (110) to have a predetermined length;
forming a head (12) at a front end of the tube body (110) and having a shoulder (122) and a neck (124), and
manufacturing a head gas barrier layer (10), which is formed of an aluminum sheet,
wherein the head gas barrier layer (10) has a shape corresponding to the shoulder (122) and the neck (124), and is manufactured to have a top surface which is closed and positioned corresponding to the neck (124); and
forming the shoulder (122) and the neck (124) after positioning the manufactured head gas barrier layer (10) on an inner surface of the tube body (110), such that the head gas barrier layer (10) is positioned at the front end of the tube body (110) by a head forming device, and an edge of a lower end of the head gas barrier layer (10) is formed as a contact portion of the head gas barrier layer (10), wherein a bonding portion (20) is formed between an outer surface of the edge and an inner surface of the front end of the tube body (110),
**characterized in that**
when a part of molten resin upon the forming of the head (120) is introduced while being permeated into a space between the outer surface of the edge of the head gas barrier layer (10) and the inner surface of the front end of the tube body (110) to form the bonding portion (20), the edge of the head gas barrier layer (10) is tightly bonded to the bonding portion (20).

## Patentansprüche

1. Ein Tubenbehälter (100) mit einer Absperrfunktion an einer Schulter (122) und einem Hals (124) davon, wobei der Tubenbehälter (100) folgendes umfasst:
einen Tubenkörper (110) mit einer aus einer Aluminiumfolie gebildeten Gassperrschicht (112);
einen Kopf (120), der an einem vorderen Ende des Tubenkörpers (110) ausgebildet ist und eine Schulter (122) und einen Hals (124) aufweist; und
eine Kopfgassperrschicht (10), die aus einer Aluminiumfolie gebildet ist,
wobei die Kopfgassperrschicht (10) eine Form hat, die einer Form der inneren Oberflächen der Schulter (122) und des Halses (124) entspricht,
wobei eine obere Oberfläche der Kopfgassperrschicht (10) geschlossen und korrespondierend zu dem Hals (124) positioniert ist und mit den inneren Oberflächen der Schulter (122) und des Halses (124) gemäß der Bildung des Kopfes (120) verbunden ist, und wobei eine Kante eines unteren Endes der Kopfgassperrschicht (10) als ein Kontaktabschnitt der Kopfgassperrschicht (10) ausgebildet ist,
wobei ein Verbindungsabschnitt (20) zwischen einer äußeren Oberfläche der Kante der Kopfgassperrschicht (10) und einer inneren Oberfläche des vorderen Endes des Tubenkörpers (110) ausgebildet ist,
**dadurch gekennzeichnet, dass**
wenn ein Teil geschmolzenes Harz beim Formen des Kopfes (120) eingeführt wird, während es in einen Raum zwischen der äußeren Oberfläche der Kante der Kopfgassperrschicht (10) und der inneren Oberfläche des vorderen Endes des Tubenkörpers (110) eindringt, um den Verbindungsabschnitt (20) zu bilden, die Kante der Kopfgassperrschicht (10) fest mit dem Verbindungsabschnitt (20) verbunden ist.

2. Ein Verfahren zur Herstellung eines Tubenbehälters (100) mit einer Absperrfunktion an einer Schulter (122) und einem Hals (124) davon, wobei das Verfahren folgendes umfasst:
Herstellen eines Tubenkörpers (110) mit einer Gassperrschicht (112), die aus einer Aluminiumfolie gebildet ist;
Schneiden des hergestellten Tubenkörpers (110) auf eine vorbestimmte Länge;
Ausbilden eines Kopfes (12) an einem vorderen Ende des Tubenkörpers (110) und mit einer Schulter (122) und einem Hals (124), und
Herstellen einer Kopfgassperrschicht (10), die aus einer Aluminiumfolie gebildet ist,
wobei die Kopfgassperrschicht (10) eine Form hat, die der Schulter (122) und dem Hals (124) entspricht, und so hergestellt ist, dass sie eine obere Oberfläche hat, die geschlossen ist und korrespondierend zu dem Hals (124) positioniert ist; und
Ausbilden der Schulter (122) und des Halses (124) nach dem Positionieren der hergestellten Kopfgassperrschicht (10) auf einer inneren Oberfläche des Tubenkörpers (110), so dass die Kopfgassperrschicht (10) am vorderen Ende des Tubenkörpers (110) durch eine Kopfausbildungsvorrichtung positioniert wird und eine Kante eines unteren Endes der Kopfgassperrschicht (10) als ein Kontaktabschnitt der Kopfgassperrschicht (10) ausgebildet wird, wobei ein Verbindungsabschnitt (20) zwischen einer äußeren Oberfläche der Kante und einer inneren Oberfläche des vorderen Endes des Tubenkörpers (110) ausgebildet wird,
**dadurch gekennzeichnet, dass**
wenn ein Teil geschmolzenes Harz beim Formen des Kopfes (120) eingeführt wird, während es in einen Raum zwischen der äußeren Oberfläche der Kante der Kopfgassperrschicht (10) und der inneren Oberfläche des vorderen Endes des Rohrkörpers (110) eindringt, um den Verbindungsabschnitt (20) zu bilden, die Kante der Kopfgassperrschicht (10) fest mit dem Verbindungsabschnitt (20) verbunden wird.

## Revendications

1. Un récipient tubulaire (100) ayant une fonction de fermeture sur un épaulement (122) et un col (124) de celui-ci, le récipient tubulaire (100) comprenant :
un corps tubulaire (110) comportant une couche barrière de gaz (112) formée d'une feuille d'aluminium ;
une tête (120) formée à une extrémité avant du corps tubulaire (110) et ayant un épaulement (122) et un col (124) ; et
une couche barrière de gaz de tête (10), laquelle est formée d'une feuille d'aluminium, dans lequel la couche barrière de gaz de tête (10) a une forme correspondant à une forme de surfaces intérieures de l'épaulement (122) et du col (124),
dans lequel une surface supérieure de la couche barrière de gaz de tête (10) est fermée et positionnée en correspondant au col (124), et est reliée aux surfaces intérieures de l'épaulement (122) et du col (124) selon la formation de la tête (120), et
dans lequel un bord d'une extrémité inférieure de la couche barrière de gaz de tête (10) est formée comme une partie de contact de la couche barrière de gaz de tête (10),
dans lequel une partie de liaison (20) est formée entre une surface extérieure du bord de la couche barrière de gaz de tête (10) et une surface intérieure de l'extrémité avant du corps tubulaire (110),
**caractérisé en ce que**,
lorsqu'une partie de résine fondue lors de la formation de la tête (120) est introduite tout en pénétrant dans un espace entre la surface extérieure du bord de la couche barrière de gaz de tête (10) et la surface intérieure de l'extrémité avant du corps tubulaire (110) pour former la portion de liaison (20), le bord de la couche barrière de gaz de tête (10) est relié de manière étanche à la portion de liaison (20).

2. Un procédé de fabrication d'un récipient tubulaire (100) ayant une fonction de fermeture sur un épaulement (122) et un col (124) de celui-ci, le procédé comprenant :
fabrication d'un corps tubulaire (110) comportant une couche barrière de gaz (112) formée d'une feuille d'aluminium ;
découpe du corps tubulaire (110) fabriqué pour avoir une longueur prédéterminée ;
formation d'une tête (12) à une extrémité avant du corps tubulaire (110) et présentant un épaulement (122) et un col (124), et
fabrication d'une couche barrière de gaz de tête (10), laquelle est formée d'une feuille d'aluminium,
dans lequel la couche barrière de gaz de tête (10) a une forme correspondant à l'épaulement (122) et au col (124), et est fabriquée pour avoir une surface supérieure qui est fermée et positionnée en correspondant au col (124) ; et
formation de l'épaulement (122) et du col (124) après positionnement de la couche barrière de gaz de tête (10) fabriquée sur une surface intérieure du corps tubulaire (110), de telle sorte que la couche barrière de gaz de tête (10) est positionnée à l'extrémité avant du corps tubulaire (110) par un dispositif de formation de tête, et un bord d'une extrémité inférieure de la couche barrière de gaz de tête (10) est formé comme une portion de contact de la couche barrière de gaz de tête (10), dans lequel une portion de liaison (20) est formée entre une surface extérieure du bord et une surface intérieure de l'extrémité avant du corps tubulaire (110),
**caractérisé en ce que**,
lorsqu'une partie de résine fondue lors de la formation de la tête (120) est introduite tout en pénétrant dans un espace entre la surface extérieure du bord de la couche barrière de gaz de tête (10) et la surface intérieure de l'extrémité avant du corps tubulaire (110) pour former la portion de liaison (20), le bord de la couche barrière de gaz de tête (10) est relié de manière étanche à la portion de liaison (20).
